Europäisches Patentamt

European Patent Office

Office européen des brevets

(11) Publication number: **0 485 634 A1**

## EUROPEAN PATENT APPLICATION
### published in accordance with Art. 158(3) EPC

(21) Application number: 91910651.8

(22) Date of filing: 05.06.91

(86) International application number:
PCT/JP91/00758

(87) International publication number:
WO 91/19250 (12.12.91 91/28)

(51) Int. Cl.5: G06F 9/06

(30) Priority: 08.06.90 JP 150230/90

(43) Date of publication of application:
20.05.92 Bulletin 92/21

(84) Designated Contracting States:
AT BE CH DE DK ES FR GB GR IT LI NL SE

(71) Applicant: OMRON CORPORATION
10, Tsuchido-cho, Hanazono, Ukyo-ku,
Kyoto-shi, Kyoto 616(JP)

(72) Inventor: AYA, Hideaki
410-42, Tsukinowa-cho, Seta
Ootsu-shi, Shiga 520-21(JP)

(74) Representative: Kahler, Kurt
Patentanwalt Dipl.-Ing. Kurt Kahler
Gerberstrasse 3 Postfach 1249
W-8948 Mindelheim(DE)

(54) **INFORMATION PROCESSING DEVICE HAVING FUNCTION OF PREVENTING PROGRAM FROM BEING UNJUSTLY USED.**

(57) An information processing device having a function of preventing programs from being unjustly used includes a memory storing predetermined secret codes. Processing programs for the information processing device include the secret codes. When the secret code is read out during the execution of such a processing program, this secret code is compared with the secret code stored beforehand and whether the former coincides with the latter or not is judged. When coincides, the continuation of executing the program is allowed, and when does not coincide, the execution is inhibited. Further, the information processing device includes a memory storing the rewriting condition of the secret code stored in the memory storing the secret codes, an input key for inputting the rewriting condition of the secret code, and a controller which when the rewriting condition is inputted through the input key, judges whether or not the inputted rewriting condition conforms to the rewriting condition stored in the memory storing the rewriting conditions, and only when conforms to, allows the rewriting of the secret code stored in the memory storing the secret codes.

FIG. 1

## Technical Field

The present invention relates generally to information processing units having a function of preventing a program from being pirated and, more particularly, information processing units having a function of preventing a program from being pirated, which prevents execution of the program by a unit having a different secret code.

## Background Art

Methods for preventing a pirated copy of software have been known, in which it is made impossible to determine the kind of a PROM (Programmable•Read•Only•Memory) by erasing a label provided for the PROM and in which a PROM fixed on a substrate is molded all together. In accordance with the former method, there is a probability that even if the label of the PROM is erased, the kind of the PROM is guessed by the arrangement or the number of pins. In accordance with the latter method, the contents stored in the PROM cannot be read out by a general PROM reader/writer and it is difficult to take out the same without destroying the PROM, so that copying can be effectively prevented to a considerable extent. If the PROM is removed from the mold without being destroyed, however, it is not impossible anymore to read out the contents stored in the PROM.

Therefore, a principal object of the present invention is to provide an information processing unit having a function of preventing a program from being pirated in which even if software is read out from a memory, it is impossible for a different unit to execute the software.

## Disclosure of the Invention

An information processing unit having a function of preventing piracy of a program in accordance with the present invention includes secret code storage means in which a predetermined secret code is stored, program instruction execution means for fetching and executing instructions from a processing program including the secret code, determination means responsive to a secret code being fetched from the processing program by the execution means for comparing the fetched secret code and the secret code stored in the secret code storage means and determining whether or not there is a coincidence therebetween, and means responsive to a coincidence determination from the determination means for permitting execution by the execution means and responsive to a non-coincidence determination from the determination means for inhibiting execution by the execution means.

The information processing unit having the function of preventing piracy of the program above may further include rewriting condition storage means having stored a rewriting condition of the secret code stored in the secret code storage means, input means for inputting the rewriting condition of the secret code, and rewriting control means for determining whether or not, when the rewriting condition from the input means is supplied as input, the input rewriting condition satisfies the rewriting condition stored in the rewriting condition storage means and permitting rewriting of the secret code stored in the secret code storage means only when there is a conformity.

Furthermore, the above-mentioned information processing unit having a function of preventing piracy of the program may further include rewriting condition alteration means for altering the rewriting condition stored in the rewriting condition storage means and decision means for deciding whether or not to permit alteration of the rewriting condition by the rewriting condition alteration means.

In accordance with the present invention, a secret code is included in a processing program. When the secret code is fetched during execution of the processing program, the secret code is compared with a secret code stored in advance and a determination is made as to whether there is a coincidence therebetween. If there is a coincidence, continuation of program execution is permitted while if there is no coincidence, the execution is inhibited. As another kind of unit has a different secret code, it is not possible to execute the program even if the program is copied.

Additionally, since the secret code can be rewritten, a new secret code may be supplied along with a program if the existing unit is to be used for another purpose. In this way, it is possible to operate the unit in a manner not so different from that for a system without a function of preventing piracy.

Furthermore, even if a code for rewriting the secret code is leaked, the code for rewriting itself can be updated, so that a highly developed function of preventing piracy of a program can be realized.

## Brief Description of the Drawings

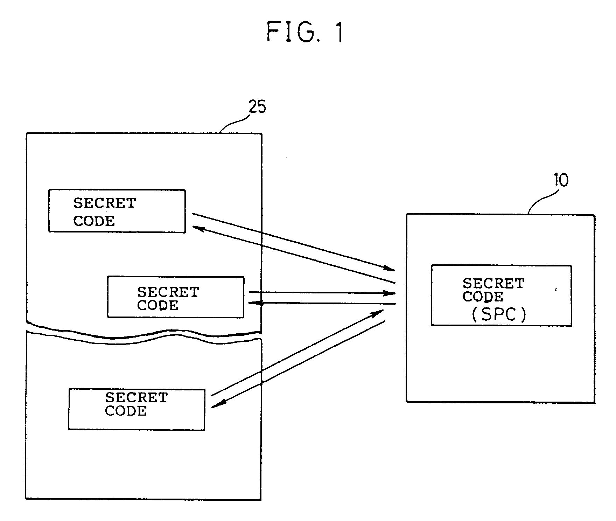

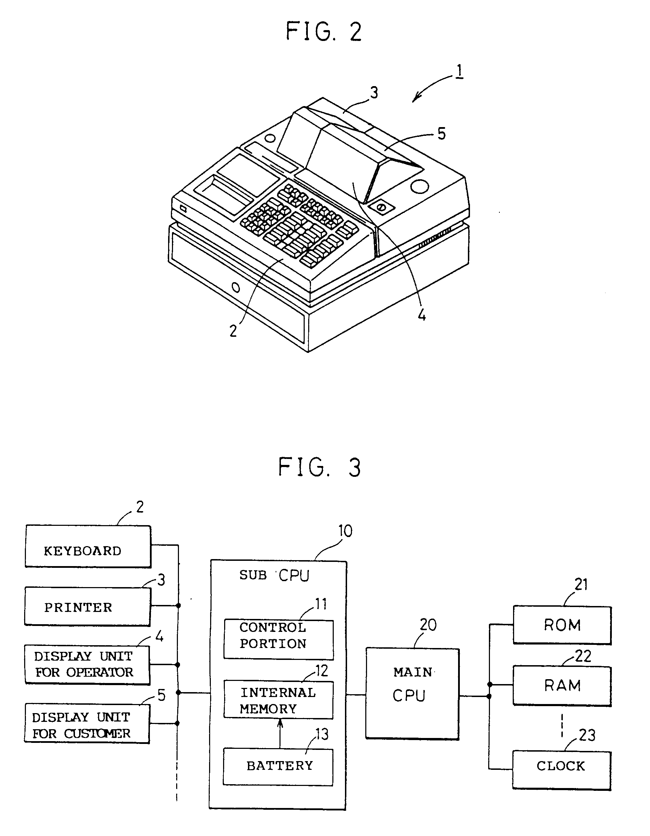

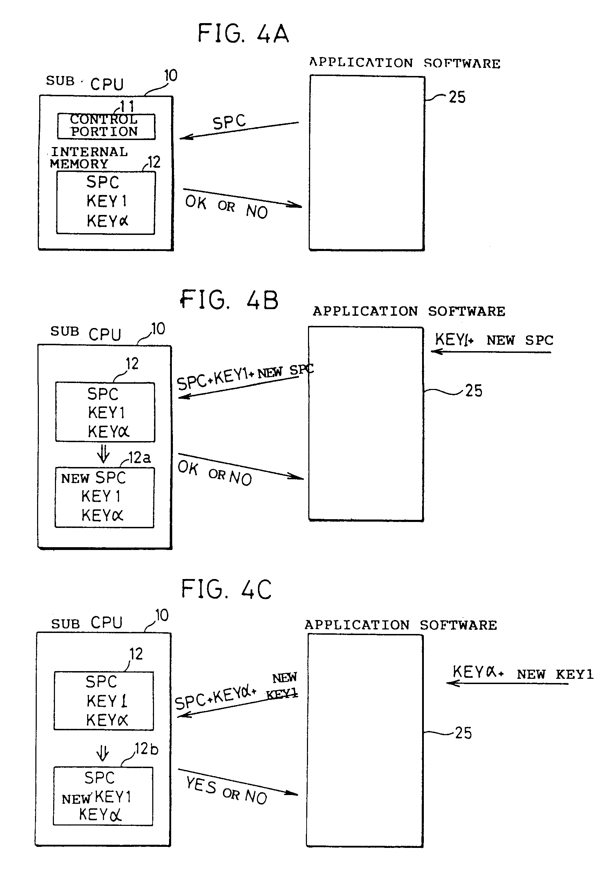

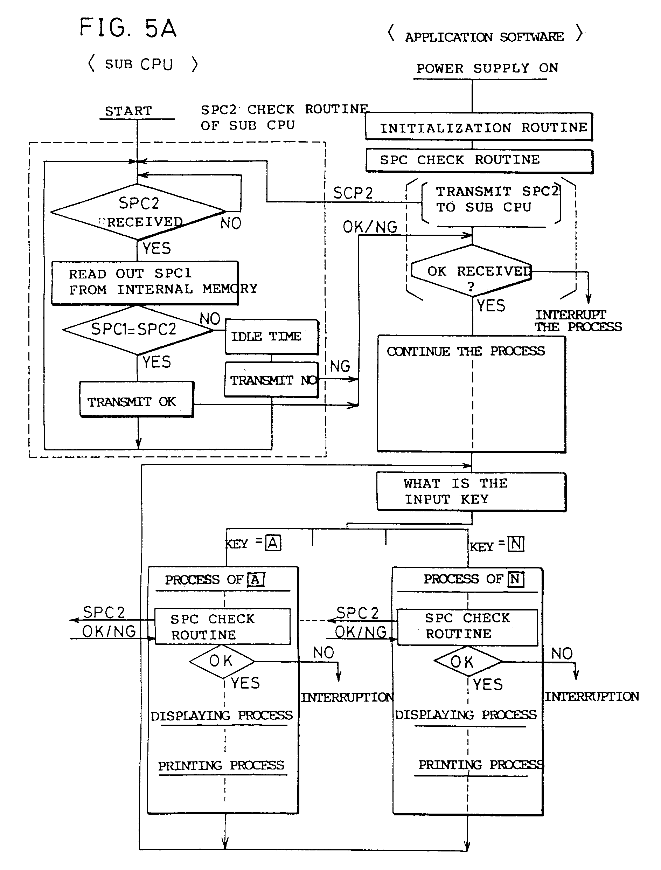

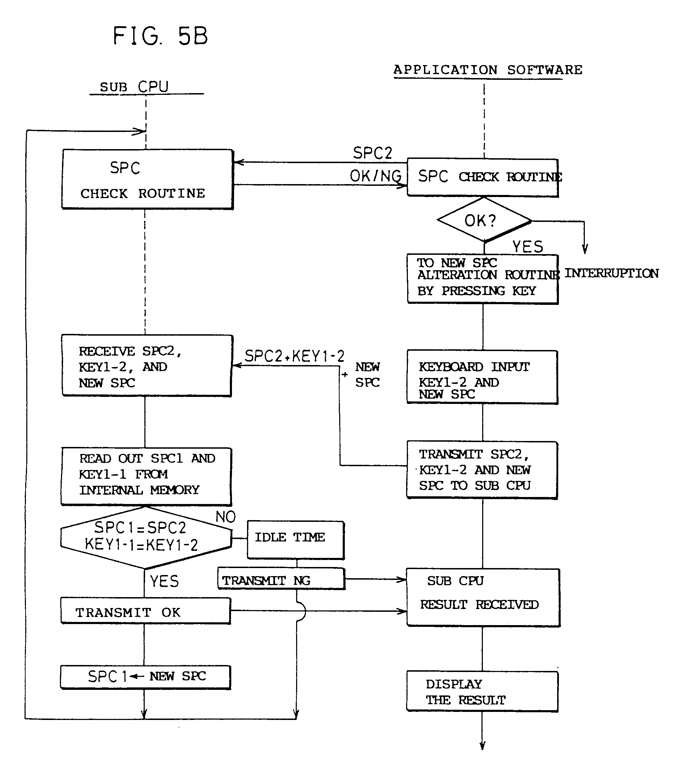

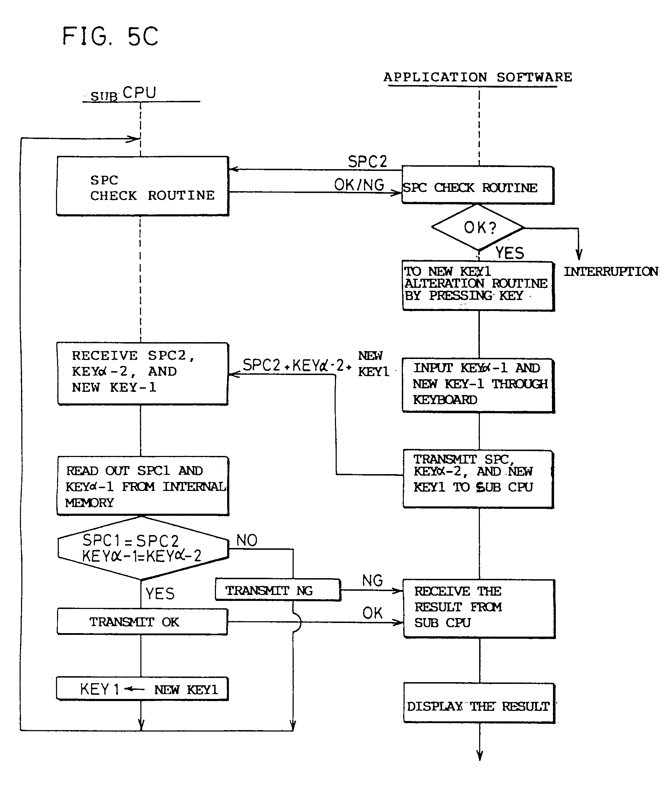

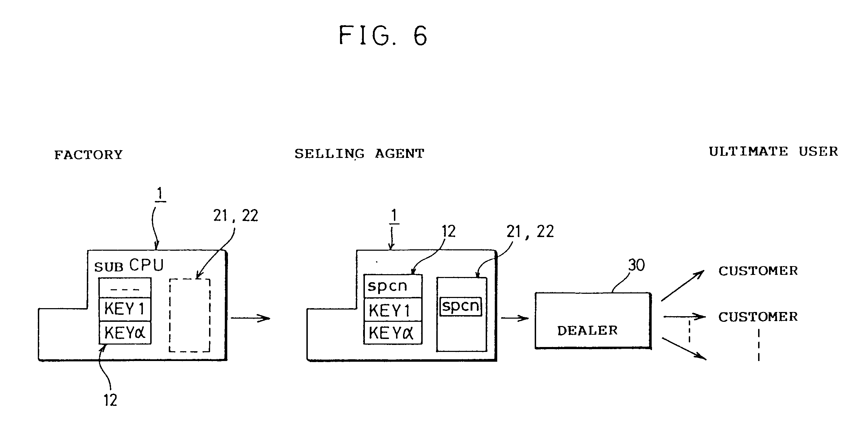

Fig. 1 is a diagram for describing a basic scheme of a function for preventing piracy of a program in an ECR to which one embodiment of the present invention is applied. Fig. 2 is a perspective view showing the appearance of the ECR to which one embodiment of the present invention is applied. Fig. 3 is a schematical block diagram showing an electrical structure of the ECR shown in Fig. 2. Figs. 4A, 4B and 4C are diagrams for describing handling of a secret code in the ECR in accordance with one embodiment of the present invention. Fig. 5A is a flow diagram for describing a way of checking a secret code in application software. Fig. 5B is a flow diagram for describing a way of rewriting a secret code. Fig. 5C is a flow diagram for describing a way of altering a code used for rewriting a secret code. Fig. 6 is a diagram for describing use of the ECR in accordance with one embodiment of the present invention.

Best Mode for Practicing the Invention

It should be noted in advance that though an electronic cash register (hereinafter referred to as ECR) will be described below as one embodiment of the present invention, the invention is not limited to this and can be applied to any information processing unit that carries out processing by execution of a program.

Fig. 1 is a diagram for describing a basic scheme for preventing piracy of a program in an ECR to which one embodiment of the present invention is applied. In Fig. 1, a subCPU 10 has a predetermined secret code (SPC) stored therein. Application software 25 being a user program has a predetermined secret code (SPC) written in each place of the program.

When the application software 25 is executed and the secret code is read out, the secret code is supplied to subCPU 10 and a determination is made as to whether the secret codes coincide with each other in subCPU 10. If the secret codes coincide with each other, continuation of execution of the program is permitted while if there is no coincidence, execution of the program is inhibited. Accordingly, the program cannot be executed in a unit having a different secret code, so that it is not used for fraudulent purpose.

Fig. 2 is a perspective view showing the appearance of the ECR to which one embodiment of the present invention is applied. Fig. 3 is a schematical block diagram showing an electrical structure of the ECR shown in Fig. 2. The structure in accordance with one embodiment of the present invention will now be described with reference to Figs. 2 and 3.

Referring to Fig. 2, a keyboard 2 as input means is provided for an ECR 1, and there are provided a printer 3, a display unit 4 for operator and a display unit 5 for customer as output means. Referring to Fig. 3, a main CPU 20 and a subCPU 10 are provided for ECR 1. The above-mentioned keyboard 2 as input means, and printer 3, operator display unit 4 and customer display unit 5 as output means are connected to subCPU 10 to be controlled by subCPU 10. A control portion 11 and an internal memory 12 are provided for subCPU 10. The secret code (SPC) above is stored in internal memory 12 and it is held by a battery 13. A ROM 21, a RAM 22, a clock 23 and other devices are connected to main CPU 20. Memories such as ROM 21 and RAM 22 have stored therein application software for performing each kind of function as an ECR.

Figs. 4A, 4B and 4C are diagrams for describing handling of a secret code in the ECR of one embodiment of the present invention and, more particularly, Fig. 4A shows a way of checking the secret code of the application software, Fig. 4B shows a way of rewriting the secret code, and Fig. 4C shows a way of altering a code used for rewriting the secret code.

Figs. 5A, 5B and 5C are diagrams for describing the operation in accordance with one embodiment of the present invention and, more particularly, Fig. 5A shows an operation corresponding to Fig. 4A, Fig. 5B shows an operation corresponding to Fig. 4B and Fig. 5C shows an operation corresponding to Fig. 4C.

A description will now be made of a scheme in which permission/inhibition of execution of the application software is controlled with reference Figs. 4A and 5A.

A program (application software) to be executed by main CPU 20 has written therein a multiplicity of secret codes (referred to as SPC in the figures). A secret code includes a bit string of 64 bits, for example. In main CPU 20, when the power supply is turned on and initialization is carried out, then the secret code is checked. That is, a secret code (SPC2) which has been written in the program is read out and transferred to subCPU 10.

Control portion 11 of subCPU 10 remains in a wait state until the secret code is transmitted. When the secret code is transmitted, in subCPU 10, the received secret code (SPC2) is compared with a secret code (SPC1) stored in internal memory 12 and a determination is made as to whether there is a coincidence therebetween. If there is a coincidence, an execution permission signal (an OK signal in the figure) is transmitted back to main CPU 20. If there is no coincidence, an execution inhibition signal (an NG signal in the figure) is transmitted back to main CPU 20 after an idle time of 1 second, for example, is counted. Here, making it impossible to easily find the secret code is the reason for counting the idle time. That is, even if a person who intends piracy continuously generates secret codes using application software, trying to find the secret code by checking each secret code, it takes $2^{64}$ x idle time to check a secret code including a bit string of 64 bits, for example, practically making it impossible for him or her to find the secret code.

If an execution inhibition signal is supplied in main CPU 20, the processing is interrupted while if an execution permission signal is supplied, the processing is continued. ECR 1 performs each kind of function by key manipulation. For example, if a key code A is input, a predetermined process A is carried out or if a key code N is input, a predetermined process N is carried out. Specifically, the A process, the N process and so on are a registration process, a summing process, a ruling process, a checking process and so on. Also in these processes, if the secret code (SPC) appears, it is checked with the above-mentioned secret code written in each point of the application software in the same way as stated above, and only when execution permission is given, the process is continued and a displaying process, a printing process and so on are carried out.

In this way, even if the application software stored in memories 21, 22 of main CPU 20 is copied and transferred to another device by a third person, it cannot be operated as far as a secret code does not coincide with the secret code existing in subCPU 10.

The copied software can be operated by copying and transferring the secret code within subCPU 10 of the device whose program is to be pirated, to a device which is to use the same. In this embodiment, however, as a way of writing the secret code, a program is made within subCPU 10, the secret code is written in internal memory 12 by an instruction from main CPU 20, and reading out from or writing in the internal memory cannot be performed using another device in a normal CPU, so that the third person cannot use the application software even if he or she copies the same.

Furthermore, as shown in Fig. 3, since subCPU 10 is interposed between main CPU 20 and the input/output means, timing for checking the secret code cannot be found only by checking a signal transmitted between subCPU 10 and main CPU 20.

The reason for it is that the signals transmitted between subCPU 10 and main CPU 20 include a signal for input/output as well as a signal for checking the secret code. Accordingly, it is also extremely difficult to find the secret code from the application program. In this way, in accordance with this embodiment, a highly developed function for preventing program piracy can be provided.

However, there are disadvantages for practical use in this case. That is, though the application software and the secret code have been provided in the plurality of ECRs 1, in shipping the ECRs to another customer after changing their application software, even if only new application software is copied for all the ECRs, the program cannot be executed since the secret codes do not coincide with each other. In this case, if the secret code could be altered, it would be advantageous since the secret code of the application software would not need to be altered. Figs. 4B and 5B show an operation for altering the secret code.

Referring to Fig. 5B, if a secret code check routine of the application software appears, a coincidence/non-coincidence between the secret codes is determined in the same way as stated in Fig. 5A, and the determination result is supplied to main CPU 20. Then, when a key code KEY1 (KEY1-2 in Fig. 5B) for rewriting the secret code and a new secret code which is desired to be newly used are input by manipulation of a specific key of ECR 1 or by another input means, the secret code, KEY1 and a new secret code are supplied to the side of subCPU 10 from the side of main CPU 20.

Internal memory 12 of subCPU 10 has a key code KEY1 (KEY1-1 in Fig. 5B) stored therein in advance. In subCPU 10, if the secret code, KEY1 and the new secret code are supplied from the side of main CPU 20, the secret code and KEY1 are read out from internal memory 12, and a coincidence/non-coincidence between the secret code of the application software 25 and the secret code of internal memory 12 and a coincidence/non-coincidence between the transmitted KEY1 and KEY1 of internal memory 12 are both determined. If the secret codes coincide with each other and KEY1s coincide with each other, a signal indicating "rewritable" is transmitted back to main CPU 20 and the secret code of internal memory 12 is rewritten to a new secret code. As a result, the internal memory changes from a stage indicated by the reference numeral 12 to a state indicated by the reference numeral 12a shown in Fig. 4B.

Conversely, if either the secret codes or KEY1s do not coincide with each other, the idle time is counted in the same way as stated above, and then a signal indicating "not rewritable" is transmitted back to main CPU 20. In main CPU 20, when a signal indicating the result of the check is supplied from the side of subCPU 10, the contents thereof are displayed on operator display unit 4.

As stated above, in accordance with this embodiment, only when the secret code included in the subCPU coincides with the secret code existing in the application software, a normal operation is carried out and, furthermore, the secret code can be altered by another key code (KEY1), so that flexible use of devices in the same manner as the conventional one can be realized while maintaining an enhanced function of preventing software piracy at the same time.

A method of altering the above-mentioned key code KEY1 will now be described with reference to Figs. 4C and 5C. KEY1 must be altered when KEY1 is known to a third party in some way.

Referring to Fig. 5C, if a secret code check routine of the application software appears, a determination is made as to a coincidence/non-coincidence between the secret codes in the same way as stated above and the determination result is supplied to main CPU 20. Then, when a key code KEYα (KEYα-1 in Fig. 5C) for rewriting the key code KEY1 and a new key code KEY1 are input by manipulation of a specific key of ECR 1 or by another input means, the secret code, KEYα and the new KEY1 are supplied to the side of subCPU 10 from the side of main CPU 20.

Internal memory 12 of subCPU 10 has KEYα - (KEYα-2 in Fig. 5C) stored therein in advance. In subCPU 10, if the secret code, KEYα and the new key code KEY1 are transmitted from the side of main CPU 20, the secret code and KEYα are read out from internal memory 12 and, subsequently, a determination is made as to a coincidence/non-coincidence both between the secret code of the application software 25 and the secret code of internal memory 12 and between the transmitted KEYα and KEYα of internal memory 12. If the secret codes coincide with each other and KEYαs coincide with each other, a signal indicating that KEY1 can be altered is transmitted back to main CPU 20 and KEY1 of internal memory 12 is altered to a new code. As a result, as shown in Fig. 4C, the internal memory changes from a stage indicated by the reference numeral 12 to a state indicated by the reference numeral 12b.

Conversely, if either the secret codes or KEYαs do not coincide with each other, a signal indicating that KEY1 cannot be altered is transmitted back to main CPU 20. In main CPU 20, when a signal indicating the result of the check is supplied from the side of subCPU 10, the contents thereof are displayed on operator display unit 4.

Fig. 6 is a diagram for describing practical use of an ECR having functions of checking a secret code and of rewriting a secret code and a key code as described above. As shown in Fig. 6, ECR 1 is shipped from the factory with KEY1 and KEYα being set in internal memory 12 of subCPU 10. At this time, neither an application program nor a secret code (SPC) is set in ECR 1. The unit is sent to a selling agent and stocked there. After selling, when a buyer and application software to be incorporated therein are determined, the application software is written in memories 21 and 22 and a secret code conforming to it is written therein to be shipped to an ultimate user through a dealer 30. The software of the device shipped in this way does not operate with a device having a different secret code even if it is copied, so that it is not likely to be used for fraudulent purposes.

However, there is a case where application already set in a device is altered to another application to be directed to another customer. In such a case, a new secret code is set using KEY1 while incorporating new application software into the memory at the same time. In this way, in a system having a function of preventing software piracy, a device can be used in almost the same manner as in a system having no software piracy preventing function.

Important in this case is a manner of controlling the secret code. In this embodiment, the secret code is controlled in the following manner. That is, KEY1 is controlled in the factory and only an authorized senior supervisor knows it. While an authorized senior supervisor at the selling agent is informed of KEY1, a junior supervisor is not informed. The secret code (SPC) can only be treated by the authorized junior supervisor at the selling agent and it is not revealed to others. Accordingly, if the secret code is to be altered to a new secret code, it cannot be altered without cooperation of the two supervisors above. Though it is necessary to alter KEY1 to a new KEY1 in case KEY1 is leaked, the authorized senior supervisor at the factory can alter the same using KEYα at the time when the leak is found.

As stated above, in accordance with this invention, the secret code which is set in the device in advance is compared with the secret code included in the program and execution of the program is permitted only when there is a coincidence therebetween, so that the program cannot be executed in a device having a different secret code.

Additionally, since the secret code is adapted to be rewritten, the existing device can be used for another purpose by providing a new secret code along with a program.

Furthermore, in case the code for rewriting the secret code is leaked, the code for rewriting the secret code can be altered using another predetermined code, so that a highly enhanced function of preventing piracy of a program can be realized.

**Claims**

1. An information processing unit having a function of preventing a program from being pirated, comprising:

secret code storage means in which a predetermined secret code is stored,

program instruction execution means for fetching an instruction from a processing program including a secret code and executing the same,

determination means responsive to a secret code being fetched from said processing program by said execution means for comparing the fetched secret code with the secret code stored in said secret code storage means and making a determination whether or not there is a coincidence therebetween, and

means responsive to a coincidence determination from said determination means for permitting execution by said execution means and responsive to a non-coincidence determination from said determination means for inhibiting execution by said execution means.

2. The information processing unit according to claim 1, further comprising:

rewriting condition storage means having stored a rewriting condition of the secret code stored in said secret code storage means,

input means for inputting the rewriting condition of said secret code, and

rewriting control means responsive to a rewriting condition being input from said input means for determining whether or not the input rewriting condition conforms to the rewriting condition stored in said rewriting condition storage means, and permitting rewriting of the secret code stored in said secret code storage means only when there is a conformity.

3. The information processing unit according to claim 2, further comprising

rewriting condition alteration means for altering the rewriting condition stored in said rewriting condition storage means, and

decision means for deciding whether or not to permit alteration of the rewriting condition by said rewriting condition alteration means.

4. An information processing unit having a function of preventing a program from being pirated and including a main processing unit and a subprocessing unit, wherein said main processing unit includes

program storage means for storing a processing program including a unique secret code, and

means responsive to a program instruction stored in said storage means for executing the program instruction,

said sub processing unit includes

secret code storage means in which a predetermined secret code is stored, and

determination means responsive to a secret code being fetched from said processing program by said program instruction execution means for comparing the fetched secret code with the secret code stored in said secret code storage means and making a determination whether or not there is a coincidence therebetween, and

said program instruction execution means includes

means responsive to a coincidence determination from said determination means for permitting execution by said execution means, and

means responsive to a non-coincidence determination from said determination means for inhibiting execution by said execution means.

5. The information processing unit according to claim 4, further comprising first input means for inputting a rewriting condition of the secret code stored in said secret code storage means, wherein said subprocessing unit further includes

rewriting condition storage means having stored the rewriting condition of the secret code stored in said secret code storage means,

means responsive to a rewriting condition being input from said first input means for determining whether or not the input rewriting condition conforms to the rewriting condition stored in said rewriting condition storage means, and

rewriting control means responsive to a conformity determination output from said determination means for permitting rewriting of the secret code stored in said secret code storage means.

6. The information processing unit according to claim 5, further comprising second input means for inputting rewriting condition alteration information for altering the rewriting condition stored in said rewriting condition storage means, wherein said subprocessing unit further includes

means for storing rewriting condition alteration information for altering the rewriting condition stored in said rewriting condition storage means,

means responsive to an input of said second input means for determining whether or not input alteration information coincides with the alteration information stored in said alteration information storage means, and

means responsive to a coincidence determination output of said determination means for altering the rewriting condition stored in said rewriting condition storage means.

# FIG. 1

FIG. 2

FIG. 3

## FIG. 4A

SUB · CPU  10

APPLICATION SOFTWARE  25

CONTROL PORTION  11

INTERNAL MEMORY  12

SPC
KEY 1
KEYα

SPC →

OK OR NO →

## FIG. 4B

SUB CPU  10

APPLICATION SOFTWARE  25

12

SPC
KEY1
KEYα

KEY1 + NEW SPC →

SPC+KEY1+ NEW SPC

⇓  12a

NEW SPC
KEY 1
KEYα

OK OR NO →

## FIG. 4C

SUB CPU  10

APPLICATION SOFTWARE  25

12

SPC
KEY 1
KEYα

KEYα + NEW KEY1 →

SPC+KEYα+ NEW KEY1

⇓  12b

SPC
NEW KEY1
KEYα

YES OR NO →

# FIG. 5A

⟨ SUB CPU ⟩

⟨ APPLICATION SOFTWARE ⟩

POWER SUPPLY ON

START    SPC2 CHECK ROUTINE OF SUB CPU

INITIALIZATION ROUTINE

SPC CHECK ROUTINE

SPC2 RECEIVED — NO

SCP2 → TRANSMIT SPC2 TO SUB CPU

YES

READ OUT SPC1 FROM INTERNAL MEMORY

OK/NG →

OK RECEIVED ?

SPC1=SPC2 — NO → IDLE TIME

YES    INTERRUPT THE PROCESS

TRANSMIT OK    TRANSMIT NO — NG → CONTINUE THE PROCESS

WHAT IS THE INPUT KEY

KEY =Ⓐ    KEY =Ⓝ

PROCESS OF Ⓐ

SPC2 / OK/NG → SPC CHECK ROUTINE

OK — NO → INTERRUPTION

YES

DISPLAYING PROCESS

PRINTING PROCESS

PROCESS OF Ⓝ

SPC2 / OK/NG → SPC CHECK ROUTINE

OK — NO → INTERRUPTION

YES

DISPLAYING PROCESS

PRINTING PROCESS

## FIG. 5B

APPLICATION SOFTWARE

SUB CPU

```
              SPC                SPC2      SPC CHECK ROUTINE
          CHECK ROUTINE      ←────────
                             OK/NG
                                            ◇ OK? ◇──────┐
                                               YES       │
                                          TO NEW SPC      INTERRUPTION
                                          ALTERATION ROUTINE
                                          BY PRESSING KEY

          RECEIVE SPC2,      SPC2+KEY1-2  KEYBOARD INPUT
          KEY1-2, AND    ←───────────  NEW  KEY1-2 AND
          NEW SPC                      SPC  NEW SPC

          READ OUT SPC1 AND             TRANSMIT SPC2,
          KEY1-1 FROM                   KEY1-2 AND NEW
          INTERNAL MEMORY               SPC TO SUB CPU

          ◇ SPC1=SPC2 ◇  NO   IDLE TIME
            KEY1-1=KEY1-2
               YES       TRANSMIT NG      SUB CPU
          TRANSMIT OK                     RESULT RECEIVED

          SPC1 ← NEW SPC                  DISPLAY
                                          THE RESULT
```

11

## FIG. 5C

APPLICATION SOFTWARE

SUB CPU

```
┌─────────────────┐         SPC2         ┌─────────────────┐
│      SPC        │◄──────────────────── │ SPC CHECK ROUTINE│
│ CHECK ROUTINE   │────────────────────► │                 │
└─────────────────┘       OK/NG          └─────────────────┘
                                                  │
                                              ◇ OK? ◇──────► INTERRUPTION
                                                  │ YES
                                         ┌─────────────────┐
                                         │ TO NEW KEY1     │
                                         │ ALTERATION ROUTINE│
                                         │ BY PRESSING KEY │
                                         └─────────────────┘

┌─────────────────┐              NEW     ┌─────────────────┐
│ RECEIVE SPC2,   │◄── SPC2+KEYα-2+ KEY1 │ INPUT KEYα-1 AND │
│ KEYα-2, AND     │                      │ NEW KEY-1 THROUGH│
│ NEW KEY-1       │                      │ KEYBOARD        │
└─────────────────┘                      └─────────────────┘

┌─────────────────┐                      ┌─────────────────┐
│ READ OUT SPC1 AND│                     │ TRANSMIT SPC,   │
│ KEYα-1 FROM INTERNAL│                  │ KEYα-2, AND NEW │
│ MEMORY          │                      │ KEY1 TO SUB CPU │
└─────────────────┘                      └─────────────────┘

   ◇ SPC1=SPC2  ◇── NO
   ◇ KEYα-1=KEYα-2 ◇─────┐
        │ YES            │
                 ┌──────────────┐   NG   ┌─────────────────┐
                 │ TRANSMIT NG  │──────► │ RECEIVE THE     │
                 └──────────────┘        │ RESULT FROM     │
┌─────────────────┐              OK      │ SUB CPU         │
│  TRANSMIT OK    │───────────────────► └─────────────────┘
└─────────────────┘

┌─────────────────┐                      ┌─────────────────┐
│ KEY1 ◄── NEW KEY1│                     │ DISPLAY THE RESULT│
└─────────────────┘                      └─────────────────┘
```

FIG. 6

# INTERNATIONAL SEARCH REPORT

International Application No PCT/JP91/00758

## I. CLASSIFICATION OF SUBJECT MATTER (if several classification symbols apply, indicate all) 6

According to International Patent Classification (IPC) or to both National Classification and IPC

Int. Cl$^5$  G06F9/06

## II. FIELDS SEARCHED

| Minimum Documentation Searched 7 | |
|---|---|
| Classification System | Classification Symbols |
| IPC | G06F9/06, 13/14, 15/00 |

Documentation Searched other than Minimum Documentation
to the Extent that such Documents are Included in the Fields Searched 8

| | |
|---|---|
| Jitsuyo Shinan Koho | 1926 - 1990 |
| Kokai Jitsuyo Shinan Koho | 1971 - 1990 |

## III. DOCUMENTS CONSIDERED TO BE RELEVANT 9

| Category* | Citation of Document, 11 with indication, where appropriate, of the relevant passages 12 | Relevant to Claim No. 13 |
|---|---|---|
| X | JP, A, 1-234935 (NEC Corp.), September 20, 1989 (20. 09. 89) | 1 |
| X | JP, A, 63-296136 (NEC Corp.), December 2, 1988 (02. 12. 88), (Family: none) | 1 |
| Y | JP, A, 1-234935 (NEC Corp.), September 20, 1989 (20. 09. 89) | 2-6 |
| Y | JP, A, 63-296136 (NEC Corp.), December 2, 1988 (02. 12. 88), (Family: none) | 2-6 |
| Y | JP, A, 2-112053 (Hitachi Micro Computer Engineering K.K.), April 24, 1990 (24. 04. 90) | 2, 3, 5, 6 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| August 22, 1991 (22. 08. 91) | September 9, 1991 (09. 09. 91) |
| International Searching Authority | Signature of Authorized Officer |
| Japanese Patent Office | |

Form PCT/ISA/210 (second sheet) (January 1985)